# FASCICULE DE BREVET EUROPEEN

(11) **EP 4 235 109 B1**
(45) Date de publication et mention de la délivrance du brevet: **25.12.2024**
(21) Numéro de dépôt: 23157459.1
(22) Date de dépôt: 20.02.2023
(51) Int. Cl.: G01D 5/244

(54) **CORPS D'ÉPREUVE ÉQUIPÉ D'UN CODEUR**
PRÜFKÖRPER MIT KODIERER
TEST BODY WITH ENCODER

(30) Priorité: 25.02.2022 FR 2201675
(43) Date de publication de la demande: 30.08.2023
(73) Titulaire: NTN Europe, 74000 Annecy (FR)
(72) Inventeur: FLAMMIER, Cécile, 74000 Annecy-Le-Vieux (FR); DURET, Christophe, 74290 Bluffy (FR)
(74) Mandataire: Sayettat, Julien Christian

(56) Documents cités:
- EP-A1- 1 533 600
- EP-A1- 3 023 746
- FR-A1- 2 774 469
- US-A1- 2004 045 374

## Description

L'invention concerne un corps d'épreuve équipé d'un codeur, un procédé de réalisation d'un tel corps d'épreuve et un système de détermination d'un couple comprenant un tel corps d'épreuve.

L'invention s'applique en particulier à la détermination d'un couple appliqué entre deux organes tournants autour d'un axe géométrique de rotation, notamment deux organes intégrés dans une transmission d'un couple moteur à un véhicule, par exemple entre le moteur électrique et la transmission mécanique d'un vélo à assistance électrique.

Pour ce faire, il est connu d'utiliser un corps d'épreuve présentant une bague intérieure solidaire en rotation de moyens de montage dudit corps sur un organe, et une bague extérieure s'étendant autour de la bague intérieure en présentant des moyens de montage dudit corps d'épreuve sur l'autre organe, lesdites bagues étant reliées par une structure déformable qui est agencée pour transmettre le couple entre les organes tout en autorisant un débattement angulaire entre lesdites bagues en fonction du couple appliqué entre les organes. Un tel corps d'épreuve peut être instrumenté avec un codeur d'un système de détermination du couple comprenant un capteur de mesure du débattement angulaire entre les bagues. Un corps d'épreuve similaire intégré à un capteur de couple entre deux organes tournants est connu du document FR-2 774 469.

On connaît par ailleurs un codeur comprenant deux anneaux portant chacun une piste magnétique apte à émettre un signal représentatif du déplacement en rotation de l'anneau correspondant, le système de détermination du couple comprenant alors un capteur présentant deux motifs d'éléments sensibles disposés à distance de lecture de respectivement une piste pour former un signal représentatif de la position angulaire de l'anneau correspondant.

Le document FR-2 821 931 décrit l'utilisation d'un dispositif de comparaison de tels signaux qui est apte à déterminer un angle de déplacement relatif des bagues, et donc le couple appliqué en ce qu'il induit ledit angle.

La limite de cette solution réside dans la précision de la détermination du couple, en ce que les pistes magnétiques peuvent présenter des défauts d'excentration par rapport à l'axe géométrique de rotation, notamment de deux natures différentes :
- une excentration magnétique induite par une distance entre le centre des pistes magnétiques et l'axe géométrique de rotation de la pièce ; et
- une excentration mécanique induite par une distance entre le centre des anneaux et l'axe géométrique de rotation ;
lesdits défauts pouvant provoquer une erreur lors de la comparaison des signaux de position, notamment en relation avec une détermination d'angles de torsion réduits.

L'invention a pour but de résoudre les problèmes de l'art antérieur en proposant notamment un corps d'épreuve équipé d'un codeur comprenant deux anneaux portant chacun une piste magnétique dont les éventuels défauts d'excentration permettent de ne pas affecter la précision de la détermination d'un couple.

A cet effet, selon un premier aspect, l'invention propose un corps d'épreuve pour un système de détermination d'un couple appliqué entre deux organes tournants autour d'un axe géométrique de rotation, ledit corps d'épreuve présentant une bague intérieure solidaire en rotation de moyens de montage dudit corps d'épreuve sur un organe, et une bague extérieure s'étendant autour de la bague intérieure en présentant des moyens de montage dudit corps d'épreuve sur l'autre organe, lesdites bagues étant reliées par une structure déformable qui est agencée pour transmettre le couple entre les organes tout en autorisant un débattement angulaire entre lesdites bagues en fonction du couple appliqué entre lesdits organes, ledit corps d'épreuve étant équipé de deux anneaux portant chacun une piste magnétique qui est apte à émettre un signal représentatif du déplacement dudit anneau en rotation, les anneaux étant fixés sur respectivement une bague et les pistes magnétiques étant aimantées de façon concentrique pour qu'elles présentent un axe de révolution commun de sorte à former respectivement une piste magnétique intérieure et une piste magnétique extérieure d'un codeur.

Selon un deuxième aspect, l'invention propose un procédé de réalisation d'un tel corps d'épreuve, ledit procédé prévoyant de fixer les anneaux sur respectivement une bague puis d'aimanter chacune des pistes magnétiques de façon concentrique pour qu'elles présentent un axe de révolution commun.

Selon un troisième aspect, l'invention propose un système de détermination d'un couple appliqué entre deux organes tournants autour d'un axe géométrique de rotation, ledit système comprenant un corps d'épreuve selon le deuxième aspect et un capteur comprenant un premier - respectivement un deuxième - motif d'éléments sensibles disposé à distance de lecture de la piste intérieure - respectivement de la piste extérieure - pour former un signal représentatif de la position angulaire de l'anneau correspondant, ledit système comprenant en outre un dispositif de comparaison des signaux délivrés par le capteur, ledit dispositif étant apte à déterminer un angle entre les bagues qui est fonction du couple appliqué.

D'autres objets et avantages de l'invention apparaîtront dans la description qui suit, faite en référence aux figures annexées, dans lesquelles :

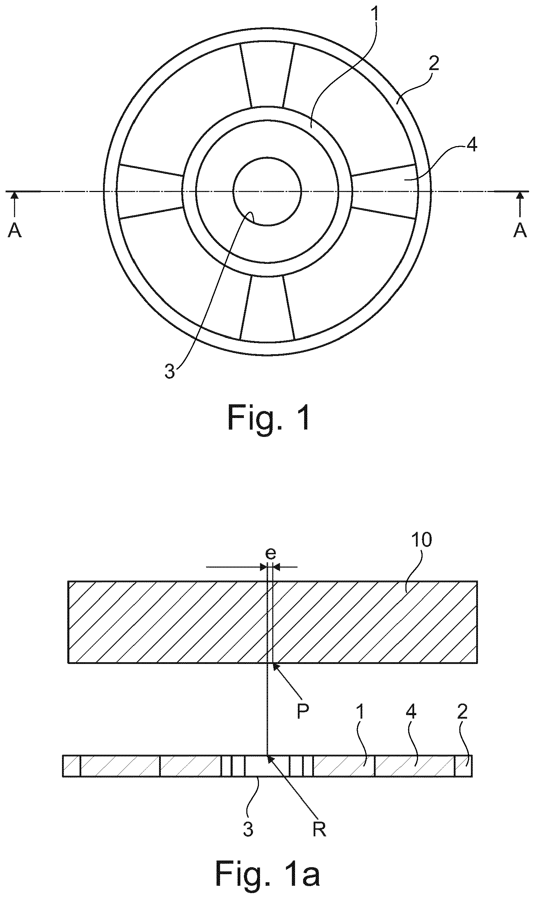

- la figure 1 est une représentation de face d'un corps d'épreuve avant fixation des anneaux selon une réalisation de l'invention, la figure 1a étant une coupe selon la ligne A-A de la figure 1 montrant la disposition d'un outil d'aimantation par rapport audit corps d'épreuve ;
- la figure 2 est une représentation de face d'un corps d'épreuve instrumenté selon une réalisation de l'invention ;
- la figure 3 représente de face l'aimantation de la piste magnétique intérieure d'un corps d'épreuve selon l'invention, la figure 3a étant une coupe selon la ligne A-A de la figure 3 ;
- la figure 4 représente de face l'aimantation de la piste magnétique extérieure d'un corps d'épreuve selon l'invention.

En relation avec ces figures, on décrit ci-dessous un système de détermination d'un couple appliqué entre deux organes tournants autour d'un axe géométrique de rotation R.

En particulier, le système permet la détermination d'un couple appliqué entre deux organes intégrés dans une transmission d'un couple moteur à un véhicule, par exemple entre le moteur électrique et la transmission mécanique d'un vélo à assistance électrique.

Le système comprend un corps d'épreuve présentant une bague intérieure 1 solidaire en rotation de moyens de montage dudit corps d'épreuve sur un organe, et une bague extérieure 2 s'étendant autour de la bague intérieure 1 en présentant des moyens de montage dudit corps d'épreuve sur l'autre organe.

Les bagues 1, 2 sont reliées par une structure déformable qui est agencée pour transmettre le couple entre les organes tout en autorisant un débattement angulaire entre lesdites bagues en fonction du couple appliqué entre lesdits organes.

Dans le mode de réalisation représenté, les bagues 1, 2 sont concentriques autour d'un manchon de montage 3 sur l'axe géométrique de rotation R, par exemple un arbre de transmission du couple à un autre arbre sur lequel la bague extérieure 2 est montée, la structure déformable comprenant au moins un bras radial 4 - quatre équirépartis angulairement sur les figures - qui relie les bagues 1, 2.

Ainsi, le couple transmis entre les arbres induit une torsion des bagues 1, 2 et donc un déplacement angulaire relatif desdites bagues suivant un angle de torsion qui est fonction dudit couple, le système déterminant ledit couple sur la base de la mesure dudit angle de torsion.

Pour ce faire, un codeur est réalisé avec le corps d'épreuve en équipant chacune des bagues 1, 2 avec un anneau respectivement intérieur 5 et extérieur 6 portant une piste magnétique respectivement intérieure 7 et extérieure 8 qui est apte à émettre un signal, par exemple périodique, représentatif du déplacement dudit anneau en rotation, le système comprenant un capteur de mesure de la position angulaire de chacun desdits anneaux.

En particulier, une succession de respectivement Nppᵢ et Nppₑ paires de pôles 9 Nord et Sud est aimantée sur un anneau 5, 6 pour former une piste magnétique multipolaire 7, 8 apte à émettre un signal magnétique de forme pseudo-sinusoïdale.

Les anneaux 5, 6 peuvent comprendre une matrice annulaire, par exemple réalisée à base d'un matériau plastique ou élastomère, dans laquelle sont dispersées des particules magnétiques, notamment des particules de ferrite ou de terres rares comme le NdFeB, lesdites particules étant aimantées pour former les pistes magnétiques 7, 8.

Le capteur comprend un premier - respectivement un deuxième - motif d'éléments sensibles disposé à distance de lecture de la piste intérieure 7 - respectivement de la piste extérieure 8 - pour former un signal représentatif de la position angulaire de l'anneau 5, 6 correspondant.

En particulier, chaque motif peut comprendre au moins deux éléments sensibles, notamment une pluralité d'éléments sensibles alignés tel que décrit dans les documents FR-2 792 403, EP-2 602 593 et EP-2 602 594.

Les éléments sensibles peuvent être à base d'un matériau magnétorésistif dont la résistance varie en fonction du signal magnétique de la piste 7, 8 à détecter, par exemple de type AMR, TMR ou GMR, ou d'une sonde à effet Hall.

Selon une réalisation, la position angulaire peut être déterminée de façon incrémentale au moyen du signal émis par une piste magnétique 7, 8. Selon une autre réalisation, la position angulaire peut être déterminée de façon absolue, c'est-à-dire par rapport à une position de référence, en prévoyant une piste magnétique secondaire ou un codage spécifique sur l'anneau 5, 6.

Le système comprend en outre un dispositif de comparaison des signaux délivrés par le capteur, ledit dispositif étant apte à déterminer un angle entre les bagues 1, 2 qui est fonction du couple appliqué.

Selon une réalisation, les capteurs délivrent des signaux carrés incrémentaux en quadrature, le dispositif de comparaison comprenant des moyens de comptage indiquant la position angulaire de chacun des anneaux 5, 6 et des moyens de soustraction permettant de calculer la différence entre lesdites positions angulaires.

Le capteur peut comprendre des moyens d'application d'un facteur d'interpolation fᵢ et fₑ au signal délivré par respectivement le premier et le deuxième motif d'éléments sensibles, les moyens de comptage mesurant un nombre de fronts nᵢ et nₑ dans chacun desdits signaux interpolés.

En relation avec des pistes intérieure 7 et extérieure 8 comprenant respectivement Nppᵢ et Nppₑ paires de pôles 9 Nord et Sud, les moyens de soustraction effectuent par exemple l'opération Nppₑ.fₑ.nᵢ - Nppᵢ.fᵢ.nₑ pour calculer la différence entre les positions angulaires des anneaux 5, 6.

En particulier, le capteur comprend des moyens d'application de facteurs d'interpolation tels que : fₑ/fᵢ = Nppᵢ/Nppₑ. Lorsque les pistes 7, 8 présentent le même nombre de paires de pôles 9 (Nppᵢ = Nppₑ) et donc une largeur polaire différente d'une piste 7 par rapport à l'autre piste 8, le calcul peut être réalisé par simple soustraction des fronts nᵢ et nₑ avec un même facteur d'interpolation (fᵢ = fₑ).

Selon une réalisation, les nombres Nppᵢ et Nppₑ de paires de pôles 9 sont tels que les pôles 9 des pistes 7, 8 présentent une largeur polaire qui est identique, ce qui procure l'avantage de pouvoir utiliser des motifs d'éléments sensibles avec la même configuration et dans les mêmes conditions de fonctionnement. On peut ainsi compenser leurs erreurs relatives à une période magnétique, par exemple leur non-linéarité ou d'autres défauts intrinsèques communs.

Le procédé de réalisation du codeur prévoit de fixer d'abord les anneaux 5, 6 sur le corps, puis d'aimanter chacune des pistes magnétiques 7, 8 de façon concentrique pour qu'elles présentent un axe de révolution commun P.

Dans le mode de réalisation représenté, les anneaux 5, 6 sont fixés avant leur aimantation sur respectivement une bague 1, 2 du corps pour former respectivement la piste magnétique intérieure 7 et la piste magnétique extérieure 8 par aimantation ultérieure.

De façon avantageuse, le procédé prévoit de fixer de façon concentrique les anneaux 5, 6 sur les bagues 1, 2 pour qu'ils présentent un axe de révolution commun avec l'axe géométrique de rotation R.

La fixation préalable permet que les anneaux 5, 6 présentent la même excentration mécanique qui est induite par une éventuelle distance entre leur centre et l'axe géométrique de rotation R, et l'aimantation ultérieure des pistes permet d'obtenir une même excentration magnétique e entre leur axe de révolution commun P et l'axe géométrique de rotation R.

Ainsi, les excentrations e étant les mêmes, leurs éventuels défauts n'affectent pas la précision de la détermination d'un couple par comparaison de la position angulaire de chacun des anneaux 5, 6, dans la mesure où l'erreur de position sera alors la même et pourra donc être éliminée par soustraction.

Selon un mode de réalisation, les pistes 7, 8 sont aimantées au moyen d'un outil 10 qui présente deux couronnes d'aimantation de respectivement un anneau 5, 6 fixé sur le corps, les couronnes pouvant présenter avantageusement une géométrie analogue à la géométrie de respectivement un anneau 5, 6.

Cette réalisation permet de pouvoir aimanter les pistes 7, 8 simultanément en respectant de façon simple leur concentricité dans la mesure où elle est imposée par la géométrie des couronnes d'aimantation.

L'aimantation peut est réalisée au moyen d'un outil 10 de sorte notamment à pouvoir aimanter les anneaux 5, 6 fixés sur les bagues 1, 2 avec leurs pistes magnétiques 7, 8 disposées dans un plan L, lesdites pistes pouvant comporter un nombre de paires de pôles 9 identique ou différent.

Selon une autre réalisation, les pistes 7, 8 sont aimantées au moyen d'un outil 11, le corps et ledit outil étant montés en rotation relative selon l'axe de révolution commun P. En particulier, l'outil 11 peut être fixe et le corps monté en rotation par rapport audit outil.

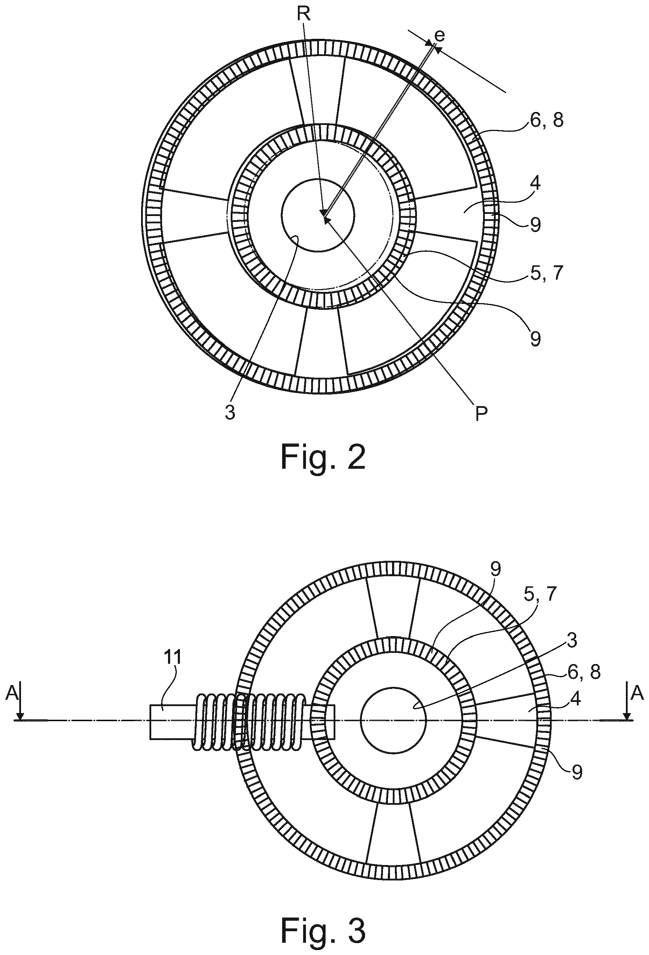

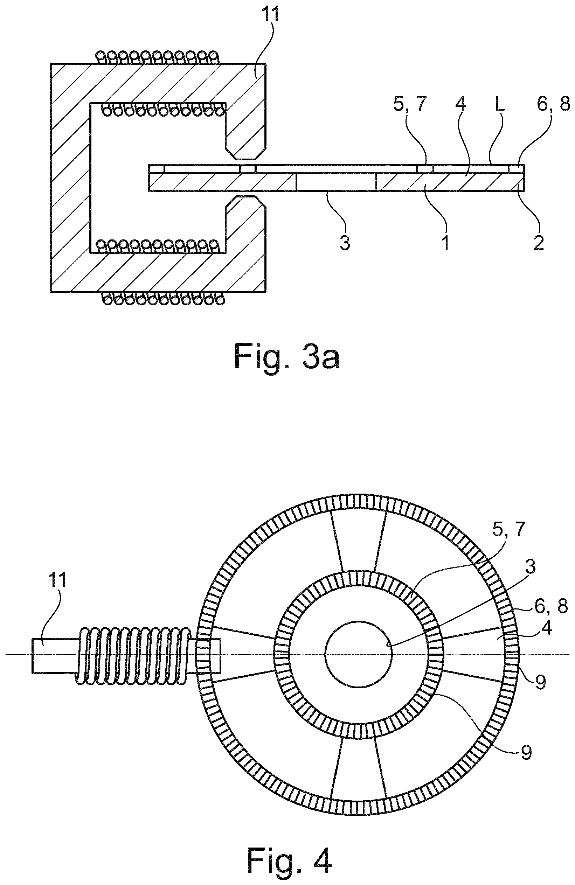

En relation avec les figures 3 et 4, le procédé prévoit un outil 11 d'aimantation d'un pôle 9, d'une paire de pôles 9 adjacents ou d'une succession angulaire de pôles 9, ledit outil et respectivement un anneau 5, 6 étant déplacés relativement pour être radialement en regard pour aimanter successivement les pôles 9 d'une piste 7, 8 par rotations successives relatives dudit outil par rapport audit anneau.

## Revendications

1. Corps d'épreuve pour un système de détermination d'un couple appliqué entre deux organes tournants autour d'un axe géométrique de rotation (R), ledit corps d'épreuve présentant une bague intérieure (1) solidaire en rotation de moyens de montage dudit corps d'épreuve sur un organe, et une bague extérieure (2) s'étendant autour de la bague intérieure (1) en présentant des moyens de montage dudit corps d'épreuve sur l'autre organe, lesdites bagues étant reliées par une structure déformable qui est agencée pour transmettre le couple entre les organes tout en autorisant un débattement angulaire entre lesdites bagues en fonction du couple appliqué entre lesdits organes, ledit corps d'épreuve étant **caractérisé en ce qu'**il est équipé de deux anneaux (5, 6) portant chacun une piste magnétique (7, 8) qui est apte à émettre un signal représentatif du déplacement dudit anneau en rotation, les anneaux (5, 6) étant fixés sur respectivement une bague (1, 2) et les pistes magnétiques (7, 8) étant aimantées de façon concentrique pour qu'elles présentent un axe de révolution commun (P) de sorte à former respectivement une piste magnétique intérieure (7) et une piste magnétique extérieure (8) d'un codeur.

2. Corps d'épreuve selon la revendication 1, **caractérisé en ce que** les anneaux (5, 6) présentent un axe de révolution commun avec l'axe géométrique de rotation (R).

3. Corps d'épreuve selon l'une des revendications 1 ou 2, **caractérisé en ce que** les anneaux (5, 6) sont fixés sur le corps de sorte que leurs pistes (7, 8) soient disposées dans un plan (L).

4. Corps d'épreuve selon l'une quelconque des revendications 1 à 3, **caractérisé en ce que** les deux anneaux (5, 6) comprennent une matrice annulaire dans laquelle sont dispersées des particules magnétiques, lesdites particules étant aimantées pour former les pistes magnétiques (7, 8).

5. Corps d'épreuve selon l'une quelconque des revendications 1 à 4, **caractérisé en ce que** la structure déformable comprend au moins un bras radial (4) qui relie les bagues (1, 2).

6. Corps d'épreuve selon l'une quelconque des revendications 1 à 5, **caractérisé en ce que** les pistes intérieure (7) et extérieure (8) comprennent respectivement Nppᵢ et Nppₑ paires de pôles (9) Nord et Sud pour former les pistes magnétiques multipolaires (7, 8).

7. Corps d'épreuve selon la revendication 6, **caractérisé en ce que** les nombres Nppᵢ et Nppₑ de paires de pôles (9) sont tels que les pôles (9) des pistes (7, 8) présentent une largeur polaire qui est identique.

8. Procédé de réalisation d'un corps d'épreuve selon l'une quelconque des revendications 1 à 7, ledit procédé prévoyant de :
- fixer les anneaux (5, 6) sur respectivement une bague (1, 2) ; puis
- aimanter chacune des pistes magnétiques (7, 8) de façon concentrique pour qu'elles présentent un axe de révolution commun (P).

9. Procédé de réalisation selon la revendication 8, **caractérisé en ce que** les pistes (7, 8) sont aimantées simultanément.

10. Procédé de réalisation selon la revendication 8, **caractérisé en ce que** les pistes (7, 8) sont aimantées au moyen d'un outil (11), le corps d'épreuve et ledit outil étant montés en rotation relative selon l'axe de révolution commun (P).

11. Procédé de réalisation selon la revendication 10 lorsqu'elle dépend de la revendication 6, **caractérisé en ce qu'**il prévoit un outil (11) d'aimantation d'un pôle (9), d'une paire de pôles (9) adjacents ou d'une succession angulaire de pôles (9), ledit outil et respectivement un anneau (5, 6) étant déplacés relativement pour être radialement en regard pour aimanter successivement les pôles (9) d'une piste (7, 8) par rotations successives relatives dudit outil par rapport audit anneau.

12. Système de détermination d'un couple appliqué entre deux organes tournants autour d'un axe géométrique de rotation (R), ledit système comprenant un corps d'épreuve selon l'une quelconque des revendications 1 à 7 et un capteur comprenant un premier - respectivement un deuxième - motif d'éléments sensibles disposé à distance de lecture de la piste intérieure (7) - respectivement de la piste extérieure (8) - pour former un signal représentatif de la position angulaire de l'anneau (5, 6) correspondant, ledit système comprenant en outre un dispositif de comparaison des signaux délivrés par le capteur, ledit dispositif étant apte à déterminer un angle entre les bagues (1, 2) qui est fonction du couple appliqué.

13. Système de détermination selon la revendication 12, **caractérisé en ce que** les capteurs délivrent des signaux carrés incrémentaux en quadrature, le dispositif de comparaison comprenant des moyens de comptage indiquant la position angulaire de chacun des anneaux (5, 6) et des moyens de soustraction permettant de calculer la différence entre lesdites positions angulaires.

14. Système de détermination selon la revendication 13 lorsqu'elle dépend de la revendication 6, **caractérisé en ce que** le capteur comprend des moyens d'application d'un facteur d'interpolation fᵢ et fₑ au signal délivré par respectivement le premier et le deuxième motif d'éléments sensibles, les moyens de comptage mesurant un nombre de fronts ni et nₑ dans chacun desdits signaux interpolés, les moyens de soustraction effectuant l'opération Nppₑ.fₑ.nᵢ - Nppᵢ.fᵢ.nₑ pour calculer la différence entre les positions angulaires des anneaux (5, 6).

15. Système de détermination selon la revendication 14, **caractérisé en ce que** le capteur comprend des moyens d'application de facteurs d'interpolation tels que : fₑ/fᵢ = Nppᵢ/Nppₑ.

## Patentansprüche

1. Prüfkörper für ein System zum Bestimmen eines Drehmoments, das zwischen zwei um eine geometrische Rotationsachse (R) rotierenden Bauteilen aufgebracht wird, wobei der Prüfkörper eine innere Buchse (1), die drehbar mit Mitteln zum Montieren des Prüfkörpers an einem Bauteil verbunden ist, und eine äußere Buchse (2) aufweist, die sich um die innere Buchse (1) erstreckt und Mittel zum Montieren des Prüfkörpers am anderen Bauteil aufweist, wobei die Buchsen durch eine verformbare Struktur verbunden sind, die dazu angeordnet ist, das Drehmoment zwischen den Bauteilen zu übertragen und gleichzeitig eine Winkelverschiebung zwischen den Buchsen in Abhängigkeit von dem zwischen den Bauteilen aufgebrachten Drehmoment zu ermöglichen, wobei der Prüfkörper **dadurch gekennzeichnet ist, dass** er mit zwei Ringen (5, 6) ausgestattet ist, von denen jeder einen Magnetstreifen (7, 8) trägt, der dazu geeignet ist, ein Signal auszusenden, das die Drehbewegung des Rings darstellt, wobei die Ringe (5, 6) jeweils an einer Buchse (1, 2) befestigt sind und die Magnetstreifen (7, 8) konzentrisch magnetisiert sind, so dass sie eine gemeinsame Drehachse (P) aufweisen, um jeweils einen inneren Magnetstreifen (7) und einen äußeren Magnetstreifen (8) eines Codierers zu bilden.

2. Prüfkörper nach Anspruch 1, **dadurch gekennzeichnet, dass** die Ringe (5, 6) eine gemeinsame Drehachse mit der geometrischen Rotationsachse (R) aufweisen.

3. Prüfkörper nach einem der Ansprüche 1 oder 2, **dadurch gekennzeichnet, dass** die Ringe (5, 6) am Körper befestigt sind, so dass ihre Streifen (7, 8) in einer Ebene (L) angeordnet sind.

4. Prüfkörper nach einem der Ansprüche 1 bis 3, **dadurch gekennzeichnet, dass** die beiden Ringe (5, 6) eine ringförmige Matrix umfassen, in der magnetische Partikel dispergiert sind, wobei die Partikel magnetisiert sind, um die magnetischen Streifen (7, 8) zu bilden.

5. Prüfkörper nach einem der Ansprüche 1 bis 4, **dadurch gekennzeichnet, dass** die verformbare Struktur mindestens einen radialen Arm (4) umfasst, der die Buchsen (1, 2) verbindet.

6. Prüfkörper nach einem der Ansprüche 1 bis 5, **dadurch gekennzeichnet, dass** der innere (7) und der äußere (8) Streifen jeweils Nppᵢ und Nppₑ Paare von Nord- und Südpolen (9) umfassen, um die multipolaren Magnetstreifen (7, 8) zu bilden.

7. Prüfkörper nach Anspruch 6, **dadurch gekennzeichnet, dass** die Anzahlen Nppᵢ und Nppₑ der Polpaare (9) so bemessen sind, dass die Pole (9) der Streifen (7, 8) eine Polbreite aufweisen, die identisch ist.

8. Verfahren zum Herstellen eines Prüfkörpers nach einem der Ansprüche 1 bis 7, wobei das Verfahren Folgendes vorsieht:
- Befestigen der Ringe (5, 6) jeweils an einer Buchse (1, 2); dann
- konzentrisches Magnetisieren der Magnetstreifen (7, 8), so dass sie eine gemeinsame Drehachse (P) aufweisen.

9. Herstellungsverfahren nach Anspruch 8, **dadurch gekennzeichnet, dass** die Streifen (7, 8) gleichzeitig magnetisiert werden.

10. Herstellungsverfahren nach Anspruch 8, **dadurch gekennzeichnet, dass** die Streifen (7, 8) mit Hilfe eines Werkzeugs (11) magnetisiert werden, wobei der Prüfkörper und das Werkzeug entsprechend der gemeinsamen Drehachse (P) relativ drehbar montiert sind.

11. Herstellungsverfahren nach Anspruch 10, wenn abhängig von Anspruch 6, **dadurch gekennzeichnet, dass** es ein Werkzeug (11) zum Magnetisieren eines Pols (9) aus einem Paar benachbarter Pole (9) oder einer Winkelfolge von Polen (9) vorsieht, wobei das Werkzeug und jeweils ein Ring (5, 6) relativ bewegt werden, um sich radial gegenüber zu liegen, um nacheinander die Pole (9) eines Streifens (7, 8) durch aufeinanderfolgende relative Rotationen des Werkzeugs in Bezug auf den Ring zu magnetisieren.

12. System zum Bestimmen eines Drehmoments, das zwischen zwei um eine geometrische Rotationsachse (R) rotierenden Bauteilen aufgebracht wird, wobei das System einen Prüfkörper nach einem der Ansprüche 1 bis 7 und einen Sensor umfasst, der ein erstes - bzw. ein zweites - Muster aus empfindlichen Elementen umfasst und in Leseentfernung von dem inneren Streifen (7) - bzw. von dem äußeren Streifen (8) - angeordnet ist, um ein Signal zu bilden, das die Winkelposition des entsprechenden Rings (5, 6) darstellt, wobei das System ferner eine Vorrichtung zum Vergleichen der vom Sensor gelieferten Signale umfasst, wobei die Vorrichtung dazu geeignet ist, einen Winkel zwischen den Ringen (1, 2) zu bestimmen, der von dem aufgebrachten Drehmoment abhängt.

13. Bestimmungssystem nach Anspruch 12, **dadurch gekennzeichnet, dass** die Sensoren inkrementelle Rechtecksignale in Quadraturphase liefern, wobei die Vergleichsvorrichtung Zählmittel, die die Winkelposition jedes der Ringe (5, 6) anzeigen, und Subtraktionsmittel umfasst, die es ermöglichen, die Differenz zwischen den Winkelpositionen zu berechnen.

14. Bestimmungssystem nach Anspruch 13, wenn abhängig von Anspruch 6, **dadurch gekennzeichnet, dass** der Sensor Mittel zum Anwenden eines Interpolationsfaktors fᵢ und fₑ auf das Signal umfasst, das jeweils von dem ersten und dem zweiten Muster aus empfindlichen Elementen geliefert wird, wobei die Zählmittel jeweils eine Anzahl von Flanken nᵢ und nₑ in jedem der interpolierten Signale messen, wobei die Subtraktionsmittel die Operation Nppₑ.fₑ.nᵢ - Nppᵢ.fᵢ.nₑ ausführen, um die Differenz zwischen den Winkelpositionen der Ringe (5, 6) zu berechnen.

15. Bestimmungssystem nach Anspruch 14, **dadurch gekennzeichnet, dass** der Sensor Mittel zum Anwenden von Interpolationsfaktoren umfasst, so dass: fₑ/fᵢ = Nppᵢ/Nppₑ.

## Claims

1. A test body for a system for determining a torque applied between two members rotating about a geometric axis of rotation (R), said test body having an internal bushing (1) secured in rotation with means for mounting said test body on one member, and an external bushing (2) extending around the internal bushing (1) while having means for mounting said test body on the other member, said bushings being connected by a deformable structure which is arranged so as to transmit the torque between the members while enabling an angular displacement between said bushings according to the torque applied between said members, said test body being **characterised in that** it is equipped with two rings (5, 6) each carrying a magnetic track (7, 8) which is able to emit a signal representative of the rotational movement of said ring, the rings (5, 6) being fastened respectively on one bushing (1, 2) and the magnetic tracks (7, 8) being magnetised concentrically so that they have a common axis of revolution (P) so as to respectively form an internal magnetic track (7) and an external magnetic track (8) of an encoder.

2. The test body according to claim 1, **characterised in that** the rings (5, 6) have a common axis of revolution with the geometric axis of rotation (R).

3. The test body according to one of claims 1 or 2, **characterised in that** the rings (5, 6) are fastened on the body so that their tracks (7, 8) are disposed in a plane (L).

4. The test body according to any one of claims 1 to 3, **characterised in that** the two rings (5, 6) comprise an annular matrix in which magnetic particles are dispersed, said particles being magnetised so as to form the magnetic tracks (7, 8).

5. The test body according to any one of claims 1 to 4, **characterised in that** the deformable structure comprises at least one radial arm (4) which connects the bushings (1, 2).

6. The test body according to any one of claims 1 to 5, **characterised in that** the internal (7) and external (8) tracks respectively comprise Nppᵢ and Nppₑ pairs of North and South poles (9) to form the multipolar magnetic tracks (7, 8).

7. The test body according to claim 6, **characterised in that** the numbers Nppᵢ and Nppₑ of pairs of poles (9) are such that the poles (9) of the tracks (7, 8) have a polar width that is identical.

8. A method for making a test body according to any one of claims 1 to 7, said method providing for:
- fastening the rings (5, 6) respectively on one bushing (1, 2); then
- magnetising each of the magnetic tracks (7, 8) concentrically so that they have a common axis of revolution (P).

9. The method according to claim 8, **characterised in that** the tracks (7, 8) are magnetised simultaneously.

10. The method according to claim 8, **characterised in that** the tracks (7, 8) are magnetised by means of a tool (11), the test body and said tool being mounted in a relative rotatable manner according to the common axis of revolution (P).

11. The method according to claim 10 when it depends of claim 6, **characterised in that** it provides for a tool (11) for magnetising a pole (9), a pair of adjacent poles (9) or an angular succession of poles (9), said tool and respectively one ring (5, 6) being moved relative to one another so as to be radially opposite one another to successively magnetise the poles (9) of a track (7, 8) by successive relative rotations of said tool relative to said ring.

12. A system for determining a torque applied between two rotating members about a geometric axis of rotation (R), said system comprising a test body according to any one of claims 1 to 7 and a sensor comprising a first - respectively a second - pattern of sensitive elements disposed at a reading distance from the internal track (7) - respectively from the external track (8) - to form a signal representative of the angular position of the corresponding ring (5, 6), said system further comprising a device for comparing the signals delivered by the sensor, said device being able to determine an angle between the rings (1, 2) which depends on the applied torque.

13. The determination system according to claim 12, **characterised in that** the sensors deliver incremental square signals in quadrature phase, the comparison device comprising counting means indicating the angular position of each of the rings (5, 6) and subtraction means allowing calculating the difference between said angular positions.

14. The determination system according to claim 13 when it depends of claim 6, **characterised in that** the sensor comprises means for applying an interpolation factor fᵢ and fₑ to the signal delivered respectively by the first and second pattern of sensitive elements, the counting means measuring a number of fronts nᵢ and nₑ in each of said interpolated signals, the subtraction means performing the operation Nppₑ.fₑ.nᵢ - Nppᵢ.fᵢ.nₑ to calculate the difference between the angular positions of the rings (5, 6).

15. The determination system according to claim 14, **characterised in that** the sensor comprises means for applying interpolation factors such that: fₑ/fᵢ = Nppᵢ/Nppₑ.
